# FASCICULE DE BREVET EUROPEEN

(11) **EP 3 688 303 B1**
(45) Date de publication et mention de la délivrance du brevet: **15.05.2024**
(21) Numéro de dépôt: 18769648.9
(22) Date de dépôt: 11.09.2018
(51) Int. Cl.: F02N 15/00, H02K 5/10, H02K 5/132, F02F 7/00, H02K 5/22, F02N 15/06

(54) **AGENCEMENT D'UN DÉMARREUR ÉQUIPÉ D'UN CAPOT ÉTANCHE SUR UN MOTEUR À COMBUSTION INTERNE**
MIT EINER WASSERDICHTEN ABDECKUNG AUSGESTATTETE STARTERANORDNUNG AN EINER BRENNKRAFTMASCHINE
STARTER ARRANGEMENT PROVIDED WITH A WATERPROOF COVER ON AN INTERNAL COMBUSTION ENGINE

(30) Priorité: 26.09.2017 FR 1758876
(43) Date de publication de la demande: 05.08.2020
(73) Titulaire: NEW H POWERTRAIN HOLDING, S.L.U., 47008 Valladolid (ES)
(72) Inventeur: MILLON, Jean-Pierre, 78870 Bailly (FR); GRATIAN, Jean-Louis, 95120 Ermont (FR)
(74) Mandataire: Renault Group
(86) Numéro de dépôt international: PCT/EP2018/074439
(87) Numéro de publication internationale: WO 2019/063280

(56) Documents cités:
- WO-A1-91/06759
- CN-Y- 201 359 935
- DE-U1-202013 009 662
- FR-A1- 2 875 558
- GB-A- 2 517 457
- JP-A- 2002 235 639
- US-A1- 2007 163 381
- US-A1- 2015 090 213

## Description

### DOMAINE TECHNIQUE DE L'INVENTION

L'invention se rapporte à un agencement d'un démarreur sur un support appartenant à un moteur à combustion interne de véhicule automobile, le démarreur étant susceptible d'être plongé au moins partiellement dans un liquide jusqu'à un niveau déterminé.

### ARRIERE PLAN TECHNIQUE DE L'INVENTION

Il est connu d'équiper les moteurs à combustion interne de véhicules automobiles avec un démarreur électrique pour enclencher la mise en rotation du moteur.

Un démarreur comporte principalement un pignon porté par un arbre rotatif qui est destiné à être entraîné en rotation par un moteur électrique enfermé dans un carter. Le pignon est en outre monté coulissant axialement par rapport au carter entre une position active dans laquelle il engrène une couronne de démarrage du moteur à combustion interne, et une position inactive dans laquelle il est écarté de la couronne. Le coulissement du pignon est commandé par un solénoïde agissant par l'intermédiaire d'une fourchette. Le solénoïde et le moteur électrique sont alimentés en électricité par l'intermédiaire de moyens de connexion.

Au moins pour certains véhicules, le démarreur présente un carter qui n'est pas étanche. Un tel démarreur présente l'avantage d'être peu onéreux.

Bien entendu, il est important d'assurer que les composants électriques et mécaniques du carter soient protégés de l'eau, pour éviter des faux contacts et/ou un endommagement par corrosion des différents composants.

Le carter permet certes d'éviter les projections de gouttes d'eau sur les composants internes, mais de l'eau est susceptible de pénétrer à l'intérieur du carter s'il est immergé, ne serait-ce que partiellement.

Pour éviter que le démarreur ne soit immergé dans l'eau en cours d'utilisation du véhicules, par exemple lorsque le véhicule franchi un passage de gué, il est connu d'agencer le démarreur sur une partie haute du moteur.

Cependant, dans certains véhicules, l'encombrement du compartiment moteur par différents accessoires, par exemple une pompe à gasoil haute pression pour un moteur de type Diesel, ne permet pas d'agencer le démarreur en partie haute du moteur. Il est donc nécessaire de trouver un nouvel emplacement pour le démarreur.

L'agencement du démarreur en partie basse du moteur pose cependant problème car il risque d'être au moins partiellement immergé lorsque le véhicule franchira un passage de gué.

D'autres exemples de l'art antérieur sont connus des documents GB 2 517 457 A, FR 2 875 558 A1, DE 20 2013 009662 U1, WO 91/06759 A1, CN 201 359 935 Y, US 2015/090213 A1 et JP 2002 235639 A.

Cependant, remplacer le démarreur actuel par un démarreur entièrement étanche n'est pas satisfaisant du fait de son coût élevé.

### BREF RESUME DE L'INVENTION

L'invention propose un agencement d'un démarreur sur un support appartenant à un moteur à combustion interne de véhicule automobile, le démarreur étant susceptible d'être plongé au moins partiellement dans un liquide jusqu'à un niveau déterminé, dans lequel le démarreur comporte :
- un pignon d'entraînement qui s'étend axialement à l'extérieur d'un carter du démarreur ;
- une bride radiale de fixation agencée à la même extrémité axiale du carter que le pignon d'entraînement et qui est destinée à être fixée axialement contre une platine du support équipée d'un orifice de passage du pignon d'entraînement ;
- des moyens de connexion électrique destinés à être raccordés à au moins un câble ;
dans lequel un capot étanche est fixé autour d'au moins une partie basse du démarreur pour former un volume étanche au moins au-dessous du niveau déterminé, le capot présentant une bouche de passage pour la bride de fixation, des moyens d'étanchéité étant intercalés entre ladite bouche et une face de serrage en vis-à-vis pour garantir une fixation étanche au moins jusqu'au niveau déterminé.

Cet agencement constitue une solution peu onéreuse qui permet ainsi de maintenir le démarreur au sec même lorsque le véhicule est immergé dans l'eau jusqu'au niveau déterminé. Ce niveau déterminé est par exemple de 50 cm de hauteur.

Selon d'autres aspects de l'invention :
- le démarreur est agencé transversalement le long d'une face latérale du support qui est destinée à délimiter radialement le volume étanche par coopération de formes complémentaire avec le capot, le capot présentant une ouverture latérale dont les bords épousent ladite face latérale pour enfermer au moins la partie basse du démarreur, des moyens d'étanchéité étant intercalés entre les bords de l'ouverture latérale et la face latérale pour garantir la fixation étanche au moins jusqu'au niveau déterminé, et le capot étant fixé directement au support avec serrage transversal ;
- le capot enveloppe la totalité du démarreur par coopération de forme complémentaire avec la face latérale du support ;
- le volume étanche est délimité radialement uniquement par le capot ;
- le capot est fixé au support avec serrage axial vers la bride de fixation ;
- la bouche entoure la bride de fixation, les moyens d'étanchéité étant serrés axialement entre une jupe bordant la bouche et la platine de fixation ;
- les moyens d'étanchéité sont serrés radialement entre une jupe bordant la bouche et la bride de fixation ;
- le capot et le démarreur sont fixés au support par des vis communes ;
- le câble d'alimentation du démarreur sort du volume étanche par un passage non étanche réservé au-dessus du niveau déterminé ;
- le câble d'alimentation sort du volume étanche par un passage étanche ;
- le capot présente une fenêtre de montage du câble qui est fermée de manière étanche par un couvercle fixé au capot, le passage étanche de câble étant réservé entre un bord de la fenêtre de montage et un bord du couvercle qui enserrent une bague en matériau élastomère enfilée autour du câble ;
- le capot comporte un clapet anti-retour agencé en fond de capot pour permettre l'évacuation d'eau par gravité.

### BREVE DESCRIPTION DES FIGURES

D'autres caractéristiques et avantages de l'invention apparaitront au cours de la lecture de la description détaillée qui va suivre pour la compréhension de laquelle on se reportera aux dessins annexés dans lesquels :
- la figure 1 est une vue schématique de profil qui représente un véhicule automobile équipé d'un moteur sur lequel un démarreur est agencé selon les enseignements de l'invention ;
- la figure 2 est une vue en perspective selon un premier angle qui représente une semelle du moteur sur laquelle le démarreur est équipé d'un capot étanche agencé selon un premier mode de réalisation de l'invention ;

- la figure 3 est une vue en section selon un plan de coupe passant par l'axe d'un pignon d'entraînement du démarreur et par l'axe d'un vilebrequin du moteur ;
- la figure 4 est une vue de côté qui représente le démarreur qui équipe le moteur ;
- la figure 5 est une vue en perspective selon un deuxième angle de la figure 2 ;
- la figure 6 est une vue en perspective à plus grande échelle qui représente le démarreur de la figure 2 équipé de son capot ;
- la figure 7 est une vue en perspective de l'arrière d'un démarreur équipé d'un capot réalisé selon un deuxième mode de réalisation de l'invention, le capot étant fermé par un couvercle ;
- la figure 8 est une vue identique à celle de la figure 7 dans laquelle le couvercle a été retiré du capot ;
- la figure 9 est une vue en perspective de l'avant du démarreur de la figure 7 équipé de son capot ;
- la figure 10 est une vue identique à celle de la figure 9 qui représente une variante du deuxième mode de réalisation dans laquelle le capot est fermé par un deuxième couvercle ;
- la figure 11 est une vue en coupe axiale qui représente le démarreur équipé d'un capot réalisé selon un troisième mode de réalisation de l'invention ;
- les figures 12 et 13 sont des vues de détails qui représentent un clapet antiretour agencé en fond de capot respectivement en position ouverte et en position fermée.

### DESCRIPTION DETAILLEE DES FIGURES

Dans la suite de la description, des éléments présentant une structure identique ou des fonctions analogues seront désignés par des mêmes références.

Dans la suite de la description, on adoptera à titre non limitatif des orientations longitudinale, dirigée d'arrière en avant, verticale, dirigée de bas en haut, et transversale dirigée de gauche à droite, qui sont indiquées par le trièdre "L,V,T" représenté aux figures. L'orientation verticale est prise à titre de repère géométrique et elle est dirigée depuis le bas de caisse du véhicule vers le toit du véhicule.

Dans la suite de la description et dans les revendications, on adoptera aussi le terme "axial" pour indiquer une direction parallèle à l'axe de rotation du pignon de démarreur, ainsi que le terme radial pour indiquer des directions orthogonales à la direction axiale.

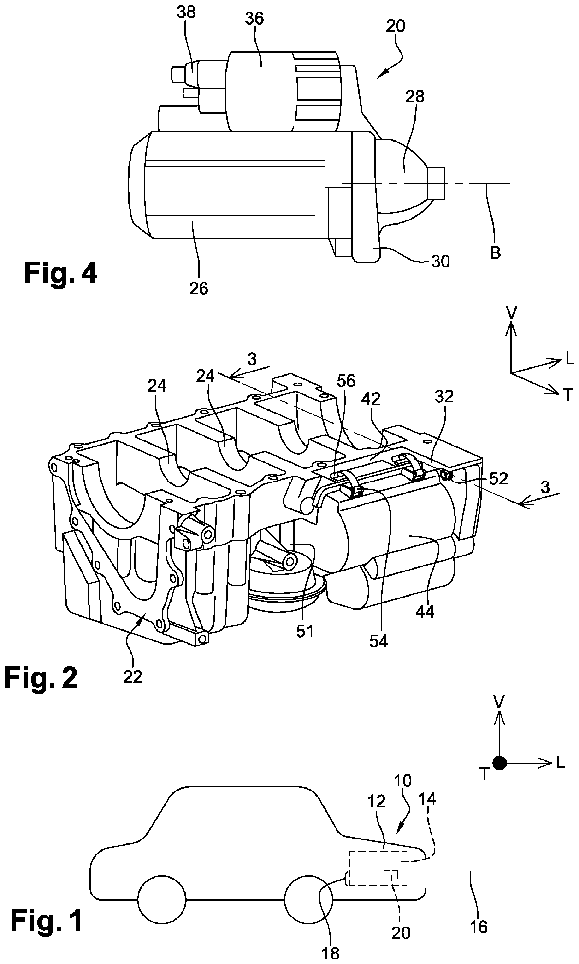

On a représenté à la figure 1 un véhicule automobile 10 qui comporte, ici à l'avant, un compartiment moteur 12 renfermant un moteur 14 à combustion interne. Il s'agit par exemple d'un moteur de type Diesel.

Le véhicule 10 est conçu pour pouvoir franchir un passage de gué. A cet effet, le véhicule 10 soit pouvoir être partiellement plongé dans un liquide, notamment dans de l'eau, jusqu'à un niveau 16 déterminé qui est un plan horizontal figuré par un trait d'axe longitudinal à la figure 1. Au moins une portion 18 inférieure du moteur 14 à combustion interne est agencée au-dessous du niveau 16 déterminé.

De manière connue, un démarreur 20 est agencé sur un support appartenant au moteur 14 à combustion interne. Le démarreur 20 est ici agencé sur la portion 18 inférieure du moteur 14 à combustion interne de manière qu'au moins une partie basse du démarreur 20 soit agencée au-dessous du niveau 16 déterminé.

Il s'agit ici d'un démarreur 20 qui est conçu pour remplir uniquement la fonction de démarreur. Il ne s'agit donc pas d'un alterno-démarreur susceptible de fonctionner de manière réversible en mode alternateur.

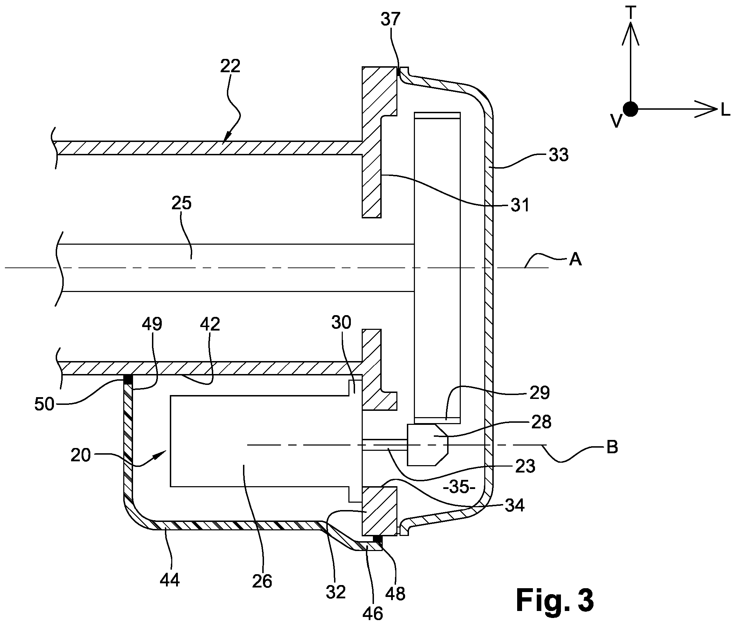

Plus particulièrement, et comme cela est illustré aux figures 2 et 3, le démarreur 20 est destiné à être fixé sur une semelle 22, aussi appelée carter inférieur, qui est destinée à être fixée sous un bloc-cylindres (non représenté) du moteur 14. La semelle 22 comporte des chapeaux 24 de paliers destinés à guider un vilebrequin 25 d'axe "A" orienté ici longitudinalement.

Comme cela est représenté plus en détails à la figure 4, le démarreur 20 comporte un carter 26 globalement cylindrique d'axe "B" d'orientation axiale qui renferme un moteur électrique. Le moteur électrique comporte un arbre moteur 23 d'axe "B" qui porte à l'une de ses extrémités un pignon 28 d'entraînement qui s'étend axialement à l'extérieur du carter 26, ici vers la droite. Dans les exemples de réalisation représentés aux figures, et de manière non limitative, l'axe "B" est orienté longitudinalement.

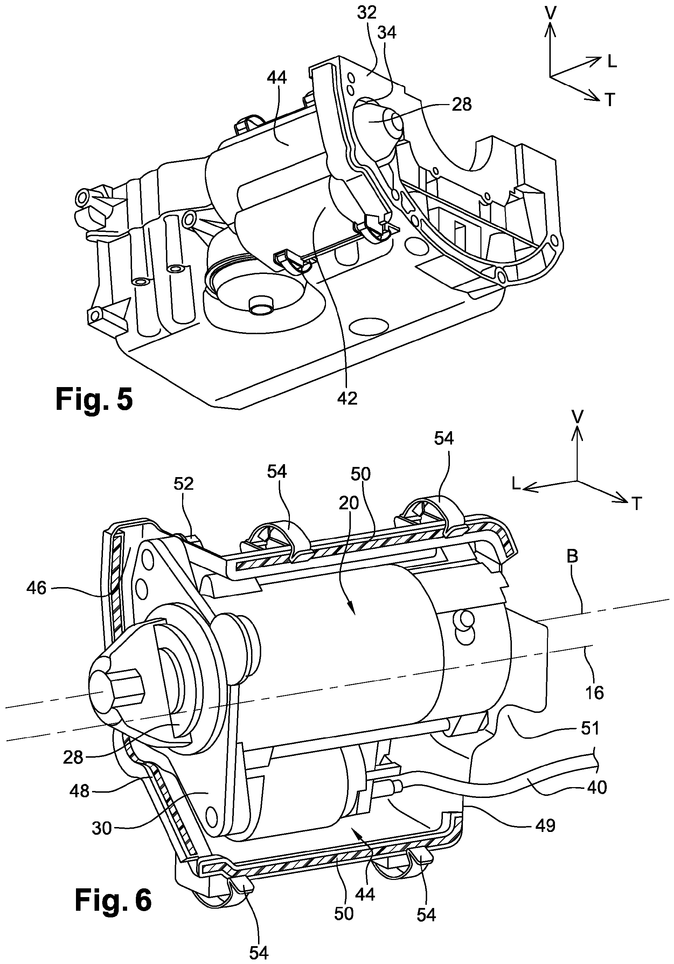

Le pignon d'entraînement 28 est monté coulissant axialement par rapport au carter 26 entre une position active, représentée à la figure 3, dans laquelle il est écarté axialement du carter 26 et dans laquelle il est destiné à venir engrener une couronne 29 de démarrage qui est ici portée par le vilebrequin 25 comme cela est représenté à la figure 3, et une position inactive, représentée à la figure 5, dans laquelle il est rétracté axialement vers le carter 26 de manière à être écarté de la couronne 29 de démarrage.

Comme illustré à la figure 3, le vilebrequin 25 s'étend axialement à l'extérieur de la semelle 22 au-delà d'une face 31 radiale d'extrémité axiale. La couronne 29 de démarrage est portée par l'extrémité axiale du vilebrequin 25, à l'extérieur de la semelle 22, en vis-à-vis de la face 31 radiale d'extrémité axiale.

La couronne 29 est comprise dans une chambre 35 qui est délimitée axialement par ladite face 31 d'extrémité axiale, dans un premier sens, et par un couvercle 33 radial, dans un deuxième sens. Le couvercle 33 ferme la chambre 35 de manière étanche par serrage axial d'un joint 37 d'étanchéité entre le couvercle et la semelle 22.

En se reportant à nouveau à la figure 4, le démarreur 20 comporte en outre une bride 30 radiale de fixation qui est agencée à l'extrémité axiale du carter 26 du côté du pignon 28 d'entraînement. La bride 30 de fixation est traversée par l'arbre moteur 23. La bride 30 de fixation est destinée à être fixée axialement contre une platine 32 radiale du support, ici la semelle 22, équipée d'un orifice 34 de passage du pignon 28 d'entraînement, comme cela est illustré aux figures 3 et 5. La platine 32 délimite axialement une partie de la chambre 35 étanche. Ainsi, le pignon 28 d'entraînement est agencé dans la chambre 35 tandis que le carter 26 du démarreur est agencé axialement de l'autre côté de la platine 32.

La platine 32 de fixation est formée par une oreille verticale qui s'étend radialement vers l'extérieur dans le prolongement de la face 31 d'extrémité axiale de la semelle 22. La platine 32 de fixation s'étend plus particulièrement en saillie par rapport à une face 42 latérale externe, ici d'orientation axiale verticale, de la semelle 22.

Le démarreur 20 comporte en outre un solénoïde 36 de forme globalement cylindrique d'axe parallèle à celui du carter 26 et qui est agencé radialement contre le carter 26. Le solénoïde 36 est destiné à commander le coulissement du pignon 28 d'entraînement par l'intermédiaire d'une fourchette (non représentée) qui s'étend partiellement à l'intérieur du carter 26.

Le démarreur 20 comporte en outre des moyens 38 de connexion électrique qui sont destinés à être raccordés à au moins un câble 40 d'alimentation électrique, visible notamment aux figures 6 à 8, pour l'alimentation du solénoïde 36 et du moteur électrique. Les moyens 38 de connexion sont ici agencés à une extrémité axiale du solénoïde 36 opposée par rapport au pignon 28 d'entraînement. Il s'agit de moyens 38 de connexion exposés à l'air libre. Ils sont formés ici par des vis de contacts destinées à recevoir des anneaux de contact portés par le câble et fixés au moyens d'écrous vissés sur les vis de contact.

Comme cela est représenté aux figures 2, 3 et 5, l'axe "B" de l'arbre moteur 23 est destiné à être agencé parallèlement à l'axe "A" du vilebrequin 25. Le démarreur 20 est plus particulièrement agencé transversalement à proximité de la face 42 latérale externe de la semelle 22.

Comme expliqué précédemment, au moins une partie basse du démarreur 20 est agencée au-dessous du niveau 16 déterminé. Dans certaines conditions, le démarreur 20 est donc susceptible d'être partiellement plongé dans l'eau.

Pour éviter que l'eau ne pénètre dans le carter 26 non étanche du démarreur 20 ou qu'elle n'entre en contact avec les moyens de connexion 38, l'invention propose qu'un capot 44 étanche soit fixé autour d'au moins une partie basse du démarreur 20 pour former un volume étanche à l'eau au moins au-dessous du niveau 16 déterminé. Le volume étanche contient ainsi le démarreur 20.

Le capot 44 est une coque réalisée en un matériau plastique rigide ou en tôle.

De manière générale, le capot 44 présente une bouche 46 ouverte axialement suffisamment large pour loger la bride 30 de fixation. Des moyens d'étanchéité, ici des premiers joints 48 sont intercalés entre le pourtour de la bouche 46 et une face de serrage en vis-à-vis pour garantir l'étanchéité de la bouche 46 au moins jusqu'au niveau 16 déterminé. Le volume étanche communique avec l'intérieur de la chambre 35 étanche en façade de la semelle 22 par l'intermédiaire de l'orifice 34 de passage du pignon 28. Ainsi, le refroidissement du volume étanche, et donc le refroidissement du démarreur 20, est au moins garanti par échange thermique avec l'air contenu dans la chambre 35.

Selon un premier mode de réalisation de l'invention qui est représenté aux figures 2, 3, 5 et 6, le volume étanche est délimité radialement par la face latérale 42 de la semelle 22, d'une part, et par le capot 44, d'autre part. Plus particulièrement, le volume étanche est réalisé par coopération de formes complémentaire entre le capot 44 et la face latérale 42.

A cet égard, le capot 44 présentant une ouverture 49 latérale dont les bords épousent ladite face latérale 42 pour enfermer au moins la partie basse du démarreur 20. Le capot 44 s'étend ainsi verticalement au moins jusqu'au niveau 16 déterminé. Dans le mode de réalisation représenté aux figures 2, 3, 5 et 6, le capot 44 enveloppe la totalité du démarreur 20 par coopération de forme complémentaire avec la face 42 latérale de la semelle 22.

En variante non représentée de l'invention, le capot ne s'étend pas au-dessus du démarreur, laissant ainsi le volume étanche ouvert vers le haut au-dessus du niveau déterminé.

Des moyens d'étanchéité, ici des deuxièmes joints 50 en élastomère, sont intercalés entre les bords de l'ouverture 49 latérale et la face 42 latérale pour garantir la fixation étanche du capot 44 au moins jusqu'au niveau 16 déterminé.

Dans ce mode de réalisation, le capot 44 est fixé directement à la semelle 22 par serrage transversal. De ce fait, la bouche 46 épouse une tranche transversale de la platine 32 de fixation contre laquelle elle est appuyée transversalement. Le premier joint 48 est ici intercalé transversalement entre le pourtour de la bouche 46 et ladite tranche de la platine 32. Ainsi, en serrant transversalement le capot 44 contre la semelle 22, on assure l'étanchéité par écrasement simultané des premiers joints 48 et des deuxièmes joints 50 entre le capot 44 et la semelle 22.

Dans ce premier mode de réalisation, le passage du câble 40 d'alimentation est prévu par un passage 51 non étanche prévu entre le bord de l'ouverture latérale 49 et la face latérale 42. Le passage 51 est bien entendu agencé au-dessus du niveau 16 déterminé. Le câble 40 est destiné à être connecté au démarreur 20 après son montage sur la semelle 22 mais avant la mise en place du capot 44.

En variante non représentée de l'invention, le passage du câble d'alimentation est étanche. A cet effet, une bague de matériau élastomère est enfilée serrée autour du câble. La bague est destinée à être serrée entre le capot et la face latérale de la semelle pour en garantir l'étanchéité.

Il est prévu une fixation démontable du capot 44 sur la semelle 22 après le montage du démarreur 20 sur la platine 32. Ainsi, il est aisé d'accéder au démarreur 20 pour une opération de maintenance. En outre, il est aisé d'adapter la fabrication du véhicule 10 en fonction de ses conditions d'utilisation. Un même modèle de véhicule 10 pourra ainsi être équipé ou non du capot 44.

La fixation et le serrage transversal du capot 44 sur la semelle 22 sont ici réalisés au moyen de quatre pattes 54 élastiques qui sont agencées verticalement de part et d'autre de l'ouverture latérale 49 du capot 44. Chaque patte élastique 54 s'étend transversalement depuis une extrémité montée pivotante sur le capot 44 autour d'un axe longitudinal et jusqu'à une extrémité libre en forme de crochet qui est destinée à être reçue dans une gorge 56 correspondante de la semelle 22. A l'état de repos, les pattes 54 sont courbées. Lorsqu'elles sont logées dans leur gorge 56, les pattes 54 sont élastiquement tendues de manière à exercer un effort transversal élastique de serrage du capot 44 contre la face latérale 42.

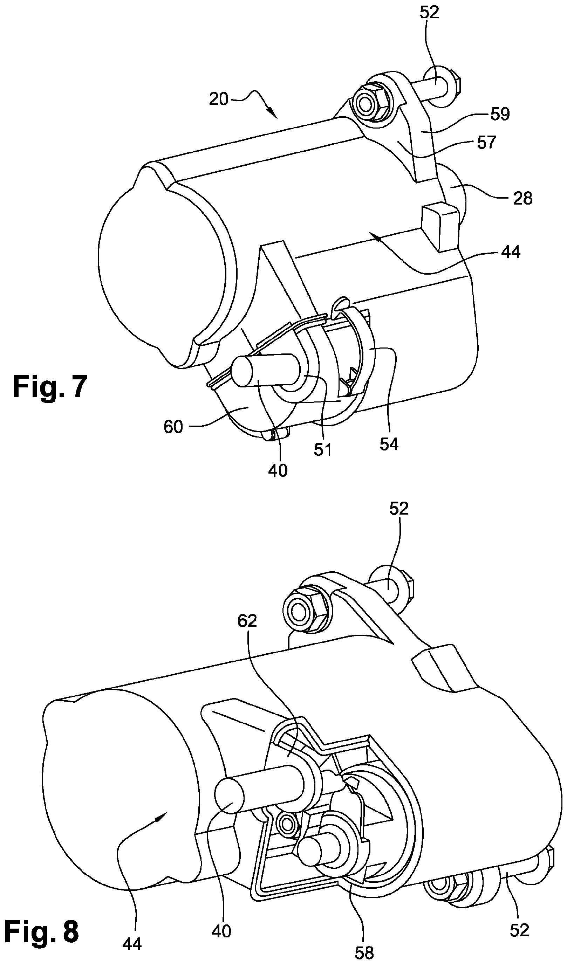

Selon un deuxième mode de réalisation de l'invention qui est représenté aux figures 7 à 9, le volume étanche est délimité radialement uniquement par le capot 44. Contrairement au mode de réalisation précédent, la face latérale 42 de la semelle 22 n'intervient plus dans la réalisation du volume étanche. Il est donc aisé d'adapter ce mode de réalisation à des moteurs 14 dans lesquels la face latérale 42 n'est pas adaptée pour former le volume étanche par coopération de forme avec le capot 44.

Comme représenté aux figures 7 à 9, le capot 44 présente la forme d'un étui étanche ouvert axialement par la bouche 46. Le démarreur 20 est inséré dans le capot 44 par sa bouche 46.

Comme illustré à la figure 7, une paroi 57 de butée du capot 44 est destinée à venir en butée axiale contre la bride 30 lorsque le démarreur 20 est inséré dans le capot 44. La bouche 46 du capot 44 est ici bordée par une jupe 59 axiale qui épouse le contour de la bride 30. La jupe 59 présente une longueur axiale inférieure à l'épaisseur axiale de la bride 30 de manière que, lorsque la paroi 57 de butée est en contact avec la bride, le bord libre de la jupe 59 ne dépasse pas axialement de la bride.

Les moyens d'étanchéité, ici le premier joint 48, sont serrés radialement entre la jupe 59 de la bouche 46 et une tranche de la bride 30 de fixation. A cet effet, la jupe 59 de la bouche 46 présente sensiblement une forme complémentaire à celle du contour de la bride 30 de fixation. La bride 30 forme ainsi un bouchon enfilé à force dans la bouche 46 par déformation élastique du premier joint 48 pour fermer de manière étanche le volume étanche.

Dans ce deuxième mode de réalisation, le volume étanche est ainsi entièrement fermé de manière étanche.

Le capot 44 est fixé avec le démarreur 20 à la semelle 22 par l'intermédiaire de deux vis 52 communes de fixation qui traversent axialement la paroi 57 de butée du capot 44, la bride 30 de fixation et des orifices de fixation correspondant de la platine 32. La bride 30 de fixation est ainsi enserrée entre la paroi 57 de butée du capot 44 et la platine 32 au moyen d'écrous de serrage.

L'étanchéité entre la bride 30 de fixation et la platine 32 est réalisée par serrage plan de la bride 30 directement contre la face en vis-à-vis de la platine 32. Ceci évite ainsi à l'eau d'entrer par l'orifice 34 de passage du pignon 28.

La connexion électrique du câble 40 d'alimentation est destinée à être réalisée après fixation du démarreur 20 équipé de son capot 44 sur la platine 32 de fixation. Pour permettre l'accessibilité aux moyens de connexion 38, le capot 44 présente une fenêtre de montage 58, visible à la figure 8, qui débouche sur les moyens de connexion 38. La fenêtre de montage 58 est fermée de manière étanche par un couvercle 60 démontable, visible notamment à la figure 7. L'étanchéité est assurée par le serrage vertical de joints (non représentés) entre le couvercle 60 et le pourtour de la fenêtre de montage 58. Le couvercle 60 est fixé au capot 44 par l'intermédiaire de pattes 54 élastiques similaires à celles qui ont été décrites dans le premier mode de réalisation.

Un passage 51 de câble est réservé entre un bord de la fenêtre 58 et un bord du couvercle 60. L'étanchéité est réalisée par une bague 62 en élastomère enfilée autour du câble 40. La bague 62 est serrée élastiquement entre le couvercle 60 et le bord de la fenêtre 58 par les pattes 54 élastiques.

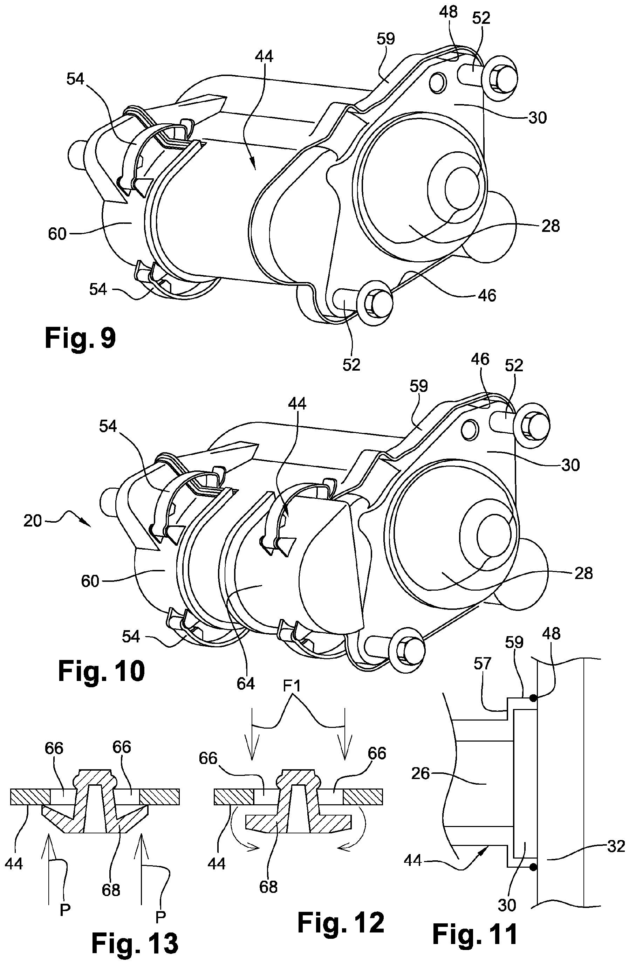

Dans une variante de ce deuxième mode de réalisation représentée à la figure 10, la bride 30 de fixation n'est pas suffisamment étendue radialement pour fermer totalement la bouche 46 du capot 44. Il demeure ainsi un jour qui permet ici le passage du solénoïde 36. Ce jour est destiné à être fermé par un couvercle 64 similaire à celui qui est utilisé pour fermer la fenêtre de montage 58 du câble 40.

Dans ce deuxième mode de réalisation, le volume étanche est entièrement fermé par le capot 44. Seul l'orifice 34 de passage du pignon 28 permet donc le refroidissement de l'air contenu dans le volume étanche par communication avec la chambre étanche 35.

Un troisième mode de réalisation de l'invention a été représenté à la figure 11. Ce mode de réalisation est similaire à celui décrit dans le deuxième mode de réalisation. La seule différence provient du fait que la jupe 59 de la bouche du capot 44 s'étend axialement sensiblement sur toute l'épaisseur de la bride 30. Un bord libre de la jupe 59 est serré axialement contre la platine 32 de fixation par les vis communes de fixation. Le joint 48 d'étanchéité est ainsi intercalé axialement entre le bord libre de la jupe 59 et la platine 32 de fixation.

Selon une variante de réalisation représentée aux figures 12 et 13 et adaptable à tous les modes de réalisation de l'invention, il est prévu de pouvoir évacuer de l'humidité qui arriverait à se frayer un chemin dans le volume étanche malgré toutes les dispositions prises pour l'éviter. Pour ce faire, le fond du capot 44 est muni de trous 66 d'évacuation qui sont agencés verticalement au point le plus bas du capot 44 pour évacuer l'eau par gravité. Les trous 66 d'évacuation sont bouchés par un clapet 68 antiretour qui permet la circulation de l'eau uniquement de l'intérieur du volume étanche vers l'extérieur du volume étanche, comme indiqué par les flèches F1 de la figure 12. Le clapet 68 antiretour est par exemple réalisé au moyen d'une membrane élastique qui est agencée à l'extérieur du capot 44 et qui est déformable entre une position de fermeture, représentée à la figure 13, dans laquelle elle bouche les trous 66 d'évacuation, notamment sous l'effet d'une pression d'eau P, et une position d'ouverture, représentée à la figure 12, vers laquelle elle est poussée par de l'eau contenue dans le volume étanche.

L'invention permet ainsi d'agencer le démarreur 20 vers le bas du moteur 14 sans avoir à remplacer le démarreur 20 traditionnellement utilisé par un démarreur étanche plus onéreux et susceptible de surchauffer en enfermant simplement le démarreur 20 non étanche dans un volume étanche communiquant avec une chambre 35 étanche du moteur au moyen d'un capot 44 rapporté.

## Revendications

1. Agencement d'un démarreur (20) sur un support (22) appartenant à un moteur (14) à combustion interne de véhicule (10) automobile, le démarreur (20) étant susceptible d'être plongé au moins partiellement dans un liquide jusqu'à un niveau déterminé (16), dans lequel le démarreur (20) comporte :
- un pignon (28) d'entraînement qui s'étend axialement à l'extérieur d'un carter (26) du démarreur (20) ;
- une bride (30) radiale de fixation agencée à la même extrémité axiale du carter (26) que le pignon (28) d'entraînement et qui est destinée à être fixée axialement contre une platine (32) du support (22) équipée d'un orifice (34) de passage du pignon (28) d'entraînement ;
- des moyens (38) de connexion électrique destinés à être raccordés à au moins un câble (40) ;
- lequel agencement comporte un capot (44) étanche fixé autour d'au moins une partie basse du démarreur (20) pour former un volume étanche au moins au-dessous du niveau déterminé (16), le capot (44) présentant une bouche (46) de passage pour la bride (30) de fixation;
ledit agencement étant **caractérisé en ce qu'**il comporte en plus des moyens (48) d'étanchéité intercalés entre ladite bouche (46) et une face de serrage en vis-à-vis pour garantir une fixation étanche au moins jusqu'au niveau déterminé (16).

2. Agencement selon la revendication précédente **caractérisé en ce que** le démarreur (20) est agencé transversalement le long d'une face (42) latérale du support (22) qui est destinée à délimiter radialement le volume étanche par coopération de formes complémentaire avec le capot (44), le capot (44) présentant une ouverture (49) latérale dont les bords épousent ladite face (42) latérale pour enfermer au moins la partie basse du démarreur (20), des moyens (50) d'étanchéité étant intercalés entre les bords de l'ouverture (49) latérale et la face latérale (42) pour garantir la fixation étanche au moins jusqu'au niveau déterminé (16), et le capot (44) étant fixé directement au support (22) avec serrage transversal.

3. Agencement selon la revendication précédente, **caractérisé en ce que** le capot (44) enveloppe la totalité du démarreur (20) par coopération de forme complémentaire avec la face latérale (42) du support (22).

4. Agencement selon la revendication 1, **caractérisé en ce que** le volume étanche est délimité radialement uniquement par le capot (44).

5. Agencement selon la revendication précédente, **caractérisé en ce que** le capot (44) est fixé au support avec serrage axial vers la bride (30) de fixation.

6. Agencement selon la revendication précédente, **caractérisé en ce que** la bouche (46) entoure la bride (30) de fixation, les moyens (48) d'étanchéité étant serrés axialement entre une jupe (59) bordant la bouche (46) et la platine (32) de fixation.

7. Agencement selon la revendication 5, **caractérisé en ce que** les moyens d'étanchéité (48) sont serrés radialement entre une jupe (59) bordant la bouche (46) et la bride (30) de fixation.

8. Agencement selon l'une quelconque des revendications 5 à 7, **caractérisé en ce que** le capot (44) et le démarreur (20) sont fixés au support par des vis (52) communes.

9. Agencement selon l'une quelconque des revendications précédentes, **caractérisé en ce que** le câble (40) d'alimentation du démarreur (20) sort du volume étanche par un passage (51) non étanche réservé au-dessus du niveau déterminé (16).

10. Agencement selon l'une quelconque des revendications 1 à 8, **caractérisé en ce que** le câble (40) d'alimentation sort du volume étanche par un passage (51) étanche.

11. Agencement selon la revendication précédente, **caractérisé en ce que** le capot (44) présente une fenêtre (58) de montage du câble (40) qui est fermée de manière étanche par un couvercle (60) fixé au capot (4), le passage (51) étanche de câble étant réservé entre un bord de la fenêtre de montage (58) et un bord du couvercle (60) qui enserrent une bague (62) en matériau élastomère enfilée autour du câble (40).

12. Agencement selon l'une quelconque des revendications précédentes, **caractérisé en ce que** le capot (44) comporte un clapet (68) anti-retour agencé en fond de capot (44) pour permettre l'évacuation d'eau par gravité.

## Patentansprüche

1. Anordnung eines Anlassers (20) auf einem zu einer Brennkraftmaschine (14) eines Kraftfahrzeugs (10) gehörenden Halter (22), wobei der Anlasser (20) wenigstens teilweise bis zu einer bestimmten Höhe (16) in eine Flüssigkeit eintauchbar ist, wobei der Anlasser (20) umfasst:
- ein Antriebsritzel (28), das sich axial außerhalb eines Gehäuses (26) des Anlassers (20) erstreckt;
- einen radialen Befestigungsflansch (30), der an demselben axialen Ende des Gehäuses (26) wie das Antriebsritzel (28) angeordnet ist und der dazu bestimmt ist, axial an einer Platte (32) des Halters (22) befestigt zu werden, die mit einer Durchgangsöffnung (34) für das Antriebsritzel (28) ausgestattet ist;
- elektrische Verbindungsmittel (38), die dazu bestimmt sind, an mindestens ein Kabel (40) angeschlossen zu werden;
- wobei die Anordnung eine dichte Haube (44) umfasst, die um mindestens einen unteren Teil des Anlassers (20) herum befestigt ist, um wenigstens unterhalb der bestimmten Höhe (16) ein dichtes Volumen zu bilden, wobei die Haube (44) ein Durchgangsloch (46) für den Befestigungsflansch (30) aufweist;
wobei die Anordnung **dadurch gekennzeichnet ist, dass** sie außerdem Dichtungsmittel (48) umfasst, die zwischen dem Loch (46) und einer gegenüberliegenden Klemmfläche angeordnet sind, um eine dichte Befestigung mindestens bis zu der bestimmten Höhe (16) zu garantieren.

2. Anordnung nach dem vorhergehenden Anspruch, **dadurch gekennzeichnet, dass** der Anlasser (20) quer entlang einer seitlichen Fläche (42) des Halters (22) angeordnet ist, die dazu bestimmt ist, das dichte Volumen durch formschlüssiges Zusammenwirken mit der Haube (44) radial zu begrenzen, wobei die Haube (44) eine seitliche Öffnung (49) aufweist, deren Ränder an die seitliche Fläche (42) angepasst sind, um mindestens den unteren Teil des Anlassers (20) zu umschließen, wobei Dichtungsmittel (50) zwischen den Rändern der seitlichen Öffnung (49) und der seitlichen Fläche (42) angeordnet sind, um die dichte Befestigung mindestens bis zu der bestimmten Höhe (16) zu garantieren, und wobei die Haube (44) mittels Querverspannung direkt am Halter (22) befestigt ist.

3. Anordnung nach dem vorhergehenden Anspruch, **dadurch gekennzeichnet, dass** die Haube (44) den gesamten Anlasser (20) durch formschlüssiges Zusammenwirken mit der seitlichen Fläche (42) des Halters (22) umgibt.

4. Anordnung nach Anspruch 1, **dadurch gekennzeichnet, dass** das dichte Volumen radial ausschließlich von der Haube (44) begrenzt wird.

5. Anordnung nach dem vorhergehenden Anspruch, **dadurch gekennzeichnet, dass** die Haube (44) mit axialer Verspannung in Richtung des Befestigungsflansches (30) am Halter befestigt ist.

6. Anordnung nach dem vorhergehenden Anspruch, **dadurch gekennzeichnet, dass** das Loch (46) den Befestigungsflansch (30) umgibt, wobei die Dichtungsmittel (48) axial zwischen einer Verkleidung (59), die das Loch (46) umrandet, und der Befestigungsplatte (32) eingeklemmt sind.

7. Anordnung nach Anspruch 5, **dadurch gekennzeichnet, dass** die Dichtungsmittel (48) radial zwischen einer Verkleidung (59), die das Loch (46) umrandet, und dem Befestigungsflansch (30) eingeklemmt sind.

8. Anordnung nach einem der Ansprüche 5 bis 7, **dadurch gekennzeichnet, dass** die Haube (44) und der Anlasser (20) durch gemeinsame Schrauben (52) am Halter befestigt sind.

9. Anordnung nach einem der vorhergehenden Ansprüche, **dadurch gekennzeichnet, dass** das Anschlusskabel (40) des Anlassers (20) aus dem dichten Volumen durch einen nicht dichten Durchgang (51) austritt, der oberhalb der bestimmten Höhe (16) vorgesehen ist.

10. Anordnung nach einem der Ansprüche 1 bis 8, **dadurch gekennzeichnet, dass** das Anschlusskabel (40) aus dem dichten Volumen durch einen dichten Durchgang (51) austritt.

11. Anordnung nach dem vorhergehenden Anspruch, **dadurch gekennzeichnet, dass** die Haube (44) ein Montagefenster (58) des Kabels (40) aufweist, das durch einen an der Haube (4) befestigten Deckel (60) dicht verschlossen ist, wobei der dichte Durchgang (51) für das Kabel zwischen einem Rand des Montagefensters (58) und einem Rand des Deckels (60) vorgesehen ist, die eine auf das Kabel (40) aufgeschobene Hülse (62) aus Elastomermaterial einschließen.

12. Anordnung nach einem der vorhergehenden Ansprüche, **dadurch gekennzeichnet, dass** die Haube (44) ein Rückschlagventil (68) umfasst, das am Boden der Haube (44) angeordnet ist, um das Ablassen von Wasser durch Schwerkraft zu ermöglichen.

## Claims

1. Arrangement of a starter (20) on a support (22) belonging to an internal combustion engine (14) of a motor vehicle (10), the starter (20) being able to be at least partially submerged in a liquid up to a predetermined level (16), wherein the starter (20) comprises:
- a drive pinion (28) which extends axially outside a casing (26) of the starter (20);
- a radial fastening flange (30) arranged at the same axial end of the casing (26) as the drive pinion (28) and intended to be fastened axially against a plate (32) of the support (22) that is equipped with an orifice (34) for the passage of the drive pinion (28);
- electrical connection means (38) intended to be connected to at least one cable (40);
- which arrangement comprises a sealed cover (44) fastened around at least a lower part of the starter (20) to form a sealed volume at least below the predetermined level (16), the cover (44) having a passage mouth (46) for the fastening flange (30);
said arrangement being **characterized in that** it further comprises sealing means (48) interposed between said mouth (46) and a facing clamping face to ensure sealed fastening at least up to the predetermined level (16).

2. Arrangement according to the preceding claim, **characterized in that** the starter (20) is arranged transversely along a lateral face (42) of the support (22) that is intended to radially delimit the sealed volume by cooperation through complementary shapes with the cover (44), the cover (44) having a lateral opening (49) whose edges closely follow said lateral face (42) to enclose at least the lower part of the starter (20), sealing means (50) being interposed between the edges of the lateral opening (49) and the lateral face (42) to ensure the sealed fastening at least up to the predetermined level (16), and the cover (44) being fastened directly to the support (22) with transverse clamping.

3. Arrangement according to the preceding claim, **characterized in that** the cover (44) envelops the whole of the starter (20) by cooperation through complementary shapes with the lateral face (42) of the support (22).

4. Arrangement according to Claim 1, **characterized in that** the sealed volume is delimited radially only by the cover (44).

5. Arrangement according to the preceding claim, **characterized in that** the cover (44) is fastened to the support with axial clamping towards the fastening flange (30) .

6. Arrangement according to the preceding claim, **characterized in that** the mouth (46) surrounds the fastening flange (30), the sealing means (48) being clamped axially between a skirt (59) bordering the mouth (46) and the fastening plate (32).

7. Arrangement according to Claim 5, **characterized in that** the sealing means (48) are clamped radially between a skirt (59) bordering the mouth (46) and the fastening flange (30).

8. Arrangement according to any one of Claims 5 to 7, **characterized in that** the cover (44) and the starter (20) are fastened to the support by common screws (52).

9. Arrangement according to any one of the preceding claims, **characterized in that** the power supply cable (40) of the starter (20) exits the sealed volume via a non-sealed passage (51) reserved above the predetermined level (16).

10. Arrangement according to any one of Claims 1 to 8, **characterized in that** the power supply cable (40) exits the sealed volume via a sealed passage (51).

11. Arrangement according to the preceding claim, **characterized in that** the cover (44) has an aperture (58) for mounting the cable (40) that is closed in a sealed manner by a cap (60) fastened to the cover (4), the sealed cable passage (51) being reserved between an edge of the mounting aperture (58) and an edge of the cap (60) that clamp a ring (62) of elastomer material fitted around the cable (40).

12. Arrangement according to any one of the preceding claims, **characterized in that** the cover (44) comprises a non-return valve (68) arranged at the bottom of the cover (44) to allow the evacuation of water by gravity.
